# EUROPÄISCHE PATENTSCHRIFT

(11) **EP 1 673 192 B1**
(45) Veröffentlichungstag und Bekanntmachung des Hinweises auf die Patenterteilung: **14.03.2007**
(21) Anmeldenummer: 04789547.9
(22) Anmeldetag: 18.10.2004
(51) Int. Cl.: B23D 77/02

(54) **REIBAHLE**
REAMER
ALESOIR

(30) Priorität: 16.10.2003 AT 16332003
(43) Veröffentlichungstag der Anmeldung: 28.06.2006
(73) Patentinhaber: Boehlerit GmbH & Co.KG., 8605 Kapfenberg (AT)
(72) Erfinder: CANTZ, Rolf, 95490 Mistelgau (DE); VOIGT, Klaus, 36433 Immelborn (DE)
(74) Vertreter: Wildhack, Helmut
(86) Internationale Anmeldenummer: PCT/AT2004/000356
(87) Internationale Veröffentlichungsnummer: WO 2005/037476

(56) Entgegenhaltungen:
- EP-A- 0 558 811
- EP-A- 0 713 747
- WO-A2-98/39127
- DE-C1- 19 746 462
- US-A- 5 551 812

## Beschreibung

Die Erfindung betrifft eine Reibahle gemäß dem Oberbegriff des Patentanspruchs 1.

Reibahlen dieser Art sind aus der EP 0 558 811 B1, der DE 43 29 553 C1 und der DE 197 46 462 C1 bekannt geworden und werden zur Herstellung passungsgenauer Bohrungen mit geglätteter Bohrungsfläche eingesetzt. Sie weisen jeweils einen Grundkörper auf, der neben einem spanend wirksamen, stimseitig befestigten Schneidelement zumindest eine Führungsleiste trägt, welche sich mit ihrer Längsachse parallel zu einer Drehachse des Grundkörpers erstreckt.

Im Hinblick auf Oberflächengüte und Bohrungsgenauigkeit sowie Verwendungsdauer derartiger Reibahlen kommt einer Führungsleiste eine besonders große Bedeutung zu. Eine Führungsleiste stützt bei einem Bohrvorgang den Grundkörper im Bohrloch ab, und entlastet in dieser Weise kräftemäßig ein Schneidelement, welches durch Drehung des Grundkörpers und unter Vorschubbewegung relativ zu einem Werkstück eine Spanabnahme an diesem bewirkt. Dabei hält die eine oder halten gegebenenfalls mehrere Führungsleisten während einer Drehbewegung des Grundkörpers das Schneidelement relativ zum bearbeiteten Werkstück auf einem gewünschten Flugkreis und tragen so zu einer exakten Führung des Schneidelementes und zu einer hohen Bohrungsgenauigkeit bei. Gleichzeitig wird durch Reiben mit einer Führungsleiste die Bohrungsfläche beim Erstellen einer Bohrung effektiv geglättet. Es kann daher gesagt werden, dass eine Führungsleiste Glättungs- und Führungsfunktionen erfüllt.

Ein fehlerfreies Erfüllen der vorstehend genannten Funktionen einer Führungsleiste ist auch bei einem Dauereinsatz von Reibahlen, wie er beispielsweise im Automobilbau häufig üblich ist, wünschenswert. Bislang wurden, um unter hohen Beanspruchungen eine möglichst lange.

Verwendungsdauer von Reibahlen zu erreichen, besondere Maßnahmen bei einer Werkstückbearbeitung bzw. ein Einsatz alternativer Führungsleisten vorgeschlagen.

Mit Bezug auf besondere Maßnahmen bei einer Werkstückbearbeitung durch Reibahlen ist es bekannt, Kühlschmiermittel einzusetzen, durch welche beim Einsatz einer Reibahle deren Führungsleisten auf möglichst niedriger Temperatur gehalten werden soll, um ein Aufschweißen von abgenommenen Spänen oder Teilen davon auf den Führungsleisten zu vermeiden. Ein Problem ist allerdings, dass Kühlschmiermittel schwer in einen Bereich zwischen Führungsfläche einer Führungsleiste und einem Werkstück einbringbar sind; oftmals kann eine Kühlwirkung im erforderlichen Ausmaß nicht erreicht werden.

Mit Bezug auf einen Einsatz alternativer Führungsleisten ist vorgeschlagen worden, üblicherweise aus Hartmetall gefertigte Führungsleisten zusätzlich mit einer Beschichtung, beispielsweise aus Diamant (EP 0 558 811 B1), zu versehen. Die Art der Beschichtung richtet sich dabei nach dem zu bearbeitenden Material, weshalb zur Bearbeitung verschiedener Materialien Reibahlen mit verschieden beschichteten Führungsleisten verwendet werden. Zum Beispiel sollen gemäß DE 43 29 553 A1 für eine Bearbeitung von gehärteten Stahllegierungen Reibahlen mit Führungsleisten aus Hartmetall, die mit kubischem Bomitrid beschichtet sind, eingesetzt werden, wohingegen für eine Bearbeitung von Aluminium-Werkstoffe eher Diamant-beschichtete Führungsleisten geeignet sein sollen.

Ein anderer Nachteil von Reibahlen mit beschichteten Führungsleisten liegt darin, dass die Beschichtungen geringe Stärken bzw. Dicken von lediglich einigen Mikrometern aufweisen. Eine Beschichtung ist daher beim Einsatz einer Reibahle rasch abgenützt. Beste Glättungs- sowie Führungsfunktionen einer Führungsleiste und damit verbunden eine hohe Bohrlochgüte können dann nicht mehr gewährleistet werden. Außerdem treten bei einer Drehbewegung der Reibahle im Einsatz starke Tangentialkräfte auf, welche an den beschichteten Führungsleisten angreifen und im Wesentlichen in Richtung der Grenzfläche Hartmetall/Beschichtung wirken, wodurch es zu einem Abblättern der Beschichtung kommen kann.

Insbesondere letztgenannte Faktoren führen dazu, dass hinsichtlich einer Bearbeitung verschiedener Materialien nicht nur individuelle Reibahlen notwendig sind, sondern auch deren praktische Verwendungsdauer bei einer Bearbeitung eines einzigen Materiales häufig unzureichend ist.

Aufgabe der Erfindung ist, eine Reibahle der eingangs genannten Art anzugeben, die sich zur Bearbeitung verschiedener Materialien eignet und eine hohe Verwendungsdauer aufweist.

Die gestellte Aufgabe löst eine Reibahle gemäß Anspruch 1.

Die mit der Erfindung erzielten Vorteile sind insbesondere darin zu sehen, dass sich eine erfindungsgemäße Reibahle zur Bearbeitung von Werkstücken aus unterschiedlichen Materialien eignet. Auf Grund einer Komposit-Bauweise einer Führungsleiste und einem erfindungsgemäßen Verlauf von Schichtkörpern resultiert eine ebene Führungsfläche, welche aus verschiedenen Werkstoffen zusammengesetzt ist. Jeder dieser Werkstoffe eignet sich besonders zur Bearbeitung eines bestimmten Materials und dementsprechend vielfältig kann eine erfindungsgemäße Reibahle verwendet werden. Da sich die Schichtkörper von einer Anlagefläche zu einer Führungsfläche bzw. umgekehrt hin erstrecken, sind außerdem die für eine Glättung einer Bohrungsfläche effektiven Werkstoffbereiche auch bei langzeitigem Einsatz und einer allenfalls gegebenen Abnützung im Bereich der Führungsfläche stets vorhanden. Somit kann eine Glättungsfunktion langzeitig sichergestellt werden.

Wird ein Werkstück mit einer erfindungsgemäßen Reibahle bearbeitet, so führt jener Teil der Schichtkörper aus dem Werkstoff mit höchster Verschleißfestigkeit in Bezug auf das bearbeitete Material eine Glättung einer Bohrungsfläche aus. Der verbleibende Teil der Schichtkörper, welcher aus anderen Werkstoffen gebildet ist, weist konsequenterweise eine geringere Verschleißfestigkeit gegenüber dem bearbeiteten Material auf und dieser Teil wird führungsflächenseitig bevorzugt abgenutzt. Hier tritt ein weiterer wesentlicher Vorteil zutage, denn durch dieses unterschiedliche Verschleißverhalten bilden sich an einer Führungsfläche gleichsam Kanäle oder Mulden aus, in denen Kühlmittel vorteilhaft einfach zu den höchst beanspruchten Kontaktflächen zwischen glättungs-aktiven Bereichen der Führungsleiste und bearbeitetem Werkstück gelangen können.

In einer bevorzugten Ausführungsform der Erfindung verlaufen die Schichtkörper im Wesentlichen parallel zur Drehachse des Grundkörpers. In dieser Ausgestaltung ist eine Abfolge von Schichtkörpem aus verschiedenen Werkstoffen über die gesamte Länge einer Führungsleiste gegeben und Bohrungsflächen sind über die gesamte Länge der Führungsleiste mit hoher Qualität glättbar. Auch kann eine effektive Kühlung und erforderlichenfalls Schmierung über die gesamte Länge einer Führungsleiste erreicht werden.

Besonders vorteilhaft ist eine Ausgestaltung einer erfindungsgemäßen Reibahle, in der die Schichtkörper im Wesentlichen normal zur Drehrichtung des Grundkörpers verlaufen. Dadurch greift eine tangentiale Reibungskraft beim Einsatz der Reibahle senkrecht auf die Schichtkörper der Führungsleiste an. Ein wechselseitiges Ablösen derselben oder Abblättern einzelner Schichtkörper ist nicht nur gänzlich vermeidbar, sondern vielmehr werden die einzelnen Schichtkörper durch eine Tangentialkraft zusammengepresst.

Als besonders günstig hat sich erwiesen, wenn die Führungsleiste Schichtkörper aus Hartmetall und Schichtkörper aus Diamant oder kubischem Bomitrid aufweist. In diesem Fall können mit einer Reibahle sowohl weichere Metalle wie Aluminium als auch härtere Metalle wie gehärtete Stahllegierungen vorteilhaft bearbeitet werden. Bei einer Bearbeitung von weicheren Materialien bewirkt ein Diamantschichtkörper eine Glättung einer Bohrung und eine Führung der Reibahle, wohingegen ein Hartmetallschichtkörper die glättungsaktive Diamantschicht stützt. Wichtig ist auch, dass sich im Bereich der Führungsfläche ein Kühlschmiermittelkanal an der freien Oberfläche des bzw. der Hartmetallschichtkörper ausbildet. Werden härtere Materialen wie Stähle bearbeitet, so verhält es sich umgekehrt: Hartmetallschichtkörper bewirken eine Glättung und Diamantschichtkörper übernehmen eine Stützfunktion bzw. es werden im Führungsflächenbereich derselben Kühlschmiermittelkanäle ausgebildet.

Im Rahmen weitergehender Untersuchungen hat sich für eine Bearbeitung verschiedener Materialien als vorteilhaft erwiesen, wenn eine Führungsleiste Schichtkörper aus Hartmetall mit einer Dicke von 1000 µm bis 1500 µm umfasst. Dicken von zumindest 1000 µm erweisen sich bei einer Bearbeitung von Stahl günstig hinsichtlich einer Glättung. Dicken von größer als 1500 µm können in einem rascheren Verschleiß der Führungsleiste bei Bearbeitung von Werkstücken aus Aluminiumlegierungen bzw. einer kürzeren Verwendungszeit der Reibahle resultieren.

Bei den vorstehend angesprochenen Untersuchungen hat es sich ferner als vorteilhaft gezeigt, wenn die Führungsleiste Schichtkörper aus Diamant oder kubischem Bomitrid mit einer Dicke von 2 µm bis 500 µm, insbesondere von 10 µm bis 50 µm, umfasst, weil dann sowohl Aluminiumlegierungen als auch Stahllegierungen bei günstigem Verschleißverhalten einer Führungsleiste und langer Verwendungsdauer der Reibahle bearbeitet werden können.

Von Vorteil ist es, wenn zumindest ein Schichtkörper aus Hartmetall besteht und mit einem Schichtkörper aus Diamant verbunden ist, weil sich eine unmittelbare Verbindung von Schichtkörper aus Hartmetall und Schichtkörper aus Diamant günstig auf die Haltbarkeit der Kompositstruktur bzw. die Haltbarkeit der Schichtkörperverbundes der Führungsleiste auswirkt. Als besonders zweckmäßig hat es sich in diesem Zusammenhang erwiesen, wenn der Schichtkörper aus Diamant durch Abscheidung von Diamant auf dem Schichtkörper aus Hartmetall erstellt ist. In dieser Weise kann ein besonders hohen Belastungen standhaltende, unmittelbare und stoffschlüssige Verbindung von glättungs-aktiven Schichtkörpem erreicht werden, wodurch eine Bereitstellung von Reibahlen mit besonders langer Verwendungsdauer möglich ist.

Eine solche Ausführungsvariante einer Reibahle ist einfach herstellbar. Es ist lediglich notwendig, Hartmetallschichtkörper mit Abmessungen entsprechend einer herzustellenden Führungsleiste beidseitig mit Diamant zu beschichten und so Einzelkomponenten herzustellen. Anschließend können die beschichteten Einzelkomponenten in den Bereichen der freien Oberflächen der Diamantbeschichtungen miteinander verbunden werden, wobei bevorzugt eine erste Lotmasse eingesetzt wird.

Im Speziellen hat sich hierfür eine Lotmasse bewährt, die als Hauptbestandteile Kupfer und Silber und als weitere Elemente Titan- und/oder Yttrium enthält. Bei einer Verbindung von Diamantschichtkörpem durch eine Lotmasse bildet diese letztlich auch einen Schichtkörper aus, welcher bevorzugt eine Dicke von 10 µm bis 25 µm aufweisen soll. Bei kleineren Dicken als 10 µm kann ein Zusammenhalt von Diamantschichten bzw. eine Verbindungswirkung durch die Lotmasse beeinträchtigt sein. Größere Dicken als 25 µm sollen vermieden werden, weil sich die metallische Lotmasse bei einer Reibahlenverwendung erwärmt und damit eine verstärkte Kühlung erforderlich ist. Auch wirken sich größere Dicken als 25 µm nicht weiter positiv auf einen Zusammenhalt von Diamantschichten aus.

Eine Befestigung der Führungsleiste am Grundkörper erfolgt zweckmäßigerweise durch eine zweite Lotmasse, welche einen niedrigeren Schmelzpunkt als eine erste Lotmasse aufweist.

Im Fall einer Abnutzung einer Führungsleiste lässt sich ein schnelles Auswechseln derselben insbesondere dann erreichen, wenn diese durch eine Klebstoffmasse mit dem Grundkörper verbunden ist.

Im Folgenden ist die Erfindung anhand von beispielhaften Figuren noch weiter beschrieben.

Es zeigen
Figur 1 eine schematische Darstellung eines normal zur Drehachse verlaufenden Querschnittes durch eine erfindungsgemäße Reibahle,
Figur 2 eine Führungsleiste,
Figur 3 einen Querschnitt durch eine Führungsleiste nach einem Einsatz.

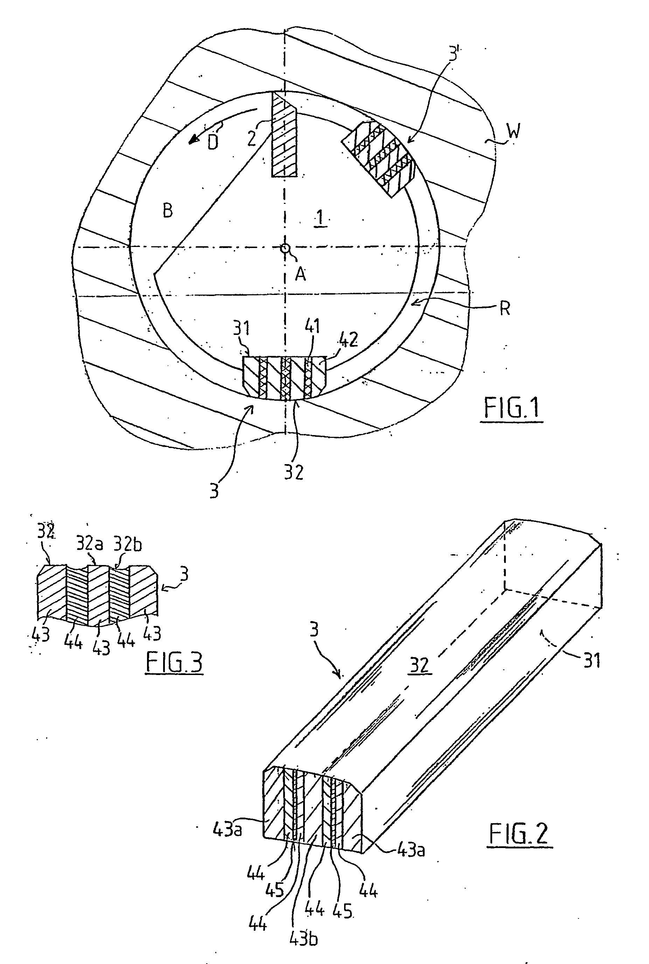

In Figur 1 ist ein schematischer Querschnitt durch einen stimseitigen Bereich einer Reibahle **R** nach der Erfindung dargestellt. Ein Grundkörper **1** mit einer Achse **A** trägt ein Schneidelement **2,** welches am Grundkörper **1** angelötet oder angeklebt ist oder in anderer Weise, beispielsweise mittels einer Klemmschraube, befestigt sein kann. Am Grundkörper **1** sind weiter zwei Führungsleisten **3, 3'** angebracht, welche sich mit Bezug auf deren Längsachsen parallel zur Achse **A** erstrecken und von eingeformten Sitzen des Grundkörpers **1** formschlüssig aufgenommen sind. Führungsleisten **3, 3'** können mit einer Klebe- oder Lotmasse stoffschlüssig mit dem Grundkörper **1** verbunden sein.

Die Führungsleisten **3, 3'** sind in Drehrichtung **D** dem Schneidelement **2** in Winkeln von ca. 45° bzw. 180° nachversetzt und bestehen jeweils aus miteinander flächig verbunden Schichtkörpem **41, 42,** welche von einer Anlagefläche **31** zu einer Führungsfläche **32** verlaufen. Weiter weisen die. einzelnen Schichtkörper **41, 42** einen Verlauf parallel zur Achse **A** und zur Drehrichtung **D** des Grundkörpers **1** auf.

Eine in Figur 1 dargestellte Reibahle **R** mit entsprechend verlaufenden Schichtkörpern **41, 42** der Führungsleisten **3** zeichnet sich durch einen besonders hohen Widerstand gegenüber einwirkenden Tangentialkräften aus. Während bei beschichteten Führungsleisten, die Beschichtung bei einer Drehbewegung im Bohrloch **B** in Richtung **D** auf Grund der dadurch parallel zu einer Führungsfläche wirkenden Kräfte abgelöst werden kann, können auf Grund einer Senkrechtstellung der Schichtkörper **41, 42** die Führungsleisten **3, 3'** erfindungsgemäßer Reibahlen nunmehr diese Kräfte problemlos aufnehmen.

In Figur 2 ist eine Ausführung der Führungsleiste **3** einer erfindungsgemäßen Reibahle näher dargestellt. Die Führungsleiste **3** besteht aus einer Mehrzahl von parallel zueinander liegenden Schichtkörpem **43, 44, 45,** welche von einer Anlagefläche **31** zu einer Führungsfläche **32** hin verlaufen und sich über die gesamte Länge der Führungsleiste **3** erstrecken.

Eine besonders einfach herzustellende und in Figur 2 gezeigte Führungsleiste **3** kann dergestalt sein, dass ein eine erste Seitenfläche bildender Schichtkörper **43a** aus Hartmetall vollflächig mit einem Schichtkörper **44** aus Diamant verbunden ist. Daran schließt sich eine Abfolge von Schichtkörpem **45, 44, 43b, 44, 45** bzw. in der Reihe der entsprechenden Werkstoffe Lotmasse - Diamant - Hartmetall - Diamant - Lotmasse an. Eine solche Schichtkörper-Reihe kann je nach Bedarf ein oder mehrmals vorgesehen werden. Zur zweiten Seitenfläche hin folgt schließlich wieder ein Schichtkörper **44** aus Diamant und eine die zweite Seitenfläche bildender Schichtkörper **43a** aus Hartmetall.

Eine Herstellung einer in Figur 2 gezeigten Führungsleiste kann in einfacher Weise erfolgen, indem einzelne Schichtkörper **43a** und **43b,** jeweils aus Hartmetall gebildet mit Abmessungen bereitgestellt werden, die der zu erstellenden Führungsleiste entsprechenden. Anschließend werden Schichtkörper **43a** auf einer Seite und Schichtkörper **43b** beidseitig mit Diamant beschichtet. Die so erstellten Komponenten werden dann durch Verbinden der Schichtkörper **44** aus Diamant mit einer Lotmasse stoffschlüssig und unter Ausbildung von Schichtkörpem **45** aus Lotmasse zu einer Führungsleiste **3** zusammengefügt.

In Figur 3 eine Ausformung einer Führungsfläche **32** bei Abnutzung eines ersten Teiles von Schichtkörpem **44,** beispielsweise bestehend aus Hartmetall, und nicht abgenützten Schichtkörpem **43,** beispielsweise bestehend aus Diamant, gezeigt. Die Führungsfläche **32** weist einerseits im Bereich der Schichtkörper **43** idealisiert ebene Bereiche **32a** auf, durch welche Flächenbereiche **32a** im Einsatz eine Glättung einer Bohrungsfläche und eine Führung der Reibahle **R** in einer Bohrung bewirkt wird. Im Bereich von Schichtkörpem **44,** welche aus bei einer Bearbeitung von Aluminium schneller verschleißenden Hartmetall bestehen, sind eingewölbte Bereiche **32b** vorhanden, so dass Kanäle bzw. Mulden ausgebildet sind, in denen Kühlschmiermittel zu glättungs-aktiven ebenen Bereichen **32a** transportiert werden kann.

Eine in Figur 3 gezeigte Ausformung einer Führungsfläche konnte bei einer Bearbeitung von Werkstücken aus Aluminium beobachtet werden. Wird eine Führungsleiste **3** in einem Zustand wie in Figur 3 gezeigt zu einer Bearbeitung von Werkstücken aus Stahl verwendet, so stellt sich gleichsam durch Verschleiß selbstschleifend wieder eine im Wesentlichen ebene Führungsfläche **32** ein. In der Folge kommt es im Umkehrung des bei Aluminiumbearbeitung beobachteten Effektes dazu, dass Führungsflächenbereiche aus Hartmetall eine Glättung der Bohrung und Führung der Reibahle übernehmen und im Bereich der Diamantschichtkörper ein Kühlschmiermitteltransport erfolgen kann.

## Patentansprüche

1. Reibahle, umfassend einen Grundkörper (1) mit einem Schneidelement (2) und zumindest eine im Wesentlichen achsial ausgerichtete Führungsleiste (3, 3') mit einer Anlagefläche (31) und einer Führungsfläche (32), wobei die Führungsleiste (3, 3') im Bereich der Anlagefläche (31) mit dem Grundkörper (1) verbunden ist, **dadurch** gekennzeichet dass die Führungsleiste (3, 3') aus von der Führungsfläche (32) zur Anlagefläche (31) hin verlaufenden Schichtkörpern (41 bis 45) mit verschiedenen Werkstoffen gebildet ist.

2. Reibahle nach Anspruch 1, **dadurch gekennzeichnet, dass** die SchichtKörper (41 bis 45) im wesentlichen parallel zur Drehachse (A) des Grundkörpers (1) verlaufen.

3. Reibahle nach Anspruch 1 oder 2, **dadurch gekennzeichnet, dass** die Schichtkörper (41 bis 45) im wesentlichen normal zur Drehrichtung (A) des Grundkörpers (1) verlaufen.

4. Reibahle nach einem der Ansprüche 1 bis 3, **dadurch gekennzeichnet, dass** die Führungsleiste (3, 3') Schichtkörper (43a, 43b) aus Hartmetall und Schichtkörper (44) aus Diamant oder kubischem Bornitrid aufweist.

5. Reibahle nach einem der Anspruch 1 bis 4, **dadurch gekennzeichnet dass** die Führungsleiste (3, 3') Schichtkörper (43a, 43b) aus Hartmetall mit einer Dicke von 1000 µm bis 1500 µm umfasst.

6. Reibahle nach einem der Ansprüche 1 bis 5, **dadurch gekennzeichnet, dass** die Führungsleiste (3, 3') Schichtkörper (44) aus Diamant oder kubischem Bornitrid mit einer Dicke von 2 µm bis 500 µm, insbesondere von 10 µm bis 50 µm, umfasst.

7. Reibahle nach einem der Ansprüche 1 bis 6, **dadurch gekennzeichnet, dass** zumindest ein Schichtkörper (43a, 43b) aus Hartmetall besteht und mit einem Schichtkörper (44) aus Diamant verbunden ist.

8. Reibahle nach Anspruch 7, **dadurch gekennzeichnet, dass** der Schichtkörper (44) aus Diamant durch Abscheidung von Diamant auf dem Schichtkörper (43a, 43b) aus Hartmetall erstellt ist.

9. Reibahle nach Anspruch 7 oder 8, **dadurch gekennzeichnet, dass** die (Führungsleiste (3, 3') Schichtkörper (44) aus Diamant aufweist, welche mit einer ersten Lotmasse (45) verbunden sind.

10. Reibahle nach Anspruch 9, **dadurch gekennzeichnet, dass** die erste Lotmasse (45) als Hauptbestandteile Kupfer und Silber und als weitere Elemente Titan- und/oder Yttrium enthält.

11. Reibahle nach Anspruch 9 oder 10, **dadurch gekennzeichnet, dass** der/die durch die erste Lotmasse (45) gebildeten Schichtkörper eine Dicke von 10 µm bis 25 µm aufweist/aufweisen.

12. Reibahle nach einem der Ansprüche 9 bis 11, **dadurch gekennzeichnet, dass** die Führungsleiste durch eine zweite Lotmasse, welche einen niedrigeren Schmelzpunkt als eine erste Lotmasse aufweist, mit dem Grundkörper (1) verbunden ist.

13. Reibahle nach einem de Ansprüche 1 bis 11, **dadurch gekennzeichnet, dass** die Führungsleiste (3, 3') durch eine Klebstoffmasse mit dem Grundkörper (1) verbunden ist.

## Claims

1. Reamer comprising a basic body (1) including a cutting element (2), and at least one substantially axially oriented guide bead (3, 3') having an engaging surface (31) and a guide surface (32), said guide bead (3, 3') being connected to said basic body (1) in the region of said engaging surface (31), **characterised in that** said guide bead (3, 3') is formed of stratified bodies (41 to 45) of different materials which extend from the guide surface (32) towards the engaging surface (31).

2. Reamer according to claim 1, **characterised in that** said stratified bodies (41 to 45) extend substantially parallel to the axis of rotation (A) of the basic body (1).

3. Reamer according to claim 1 or 2, **characterised in that** said stratified bodies (41 to 45) extend substantially normally to the direction of rotation (A) of the basic body (1).

4. Reamer according to any of claims 1 to 3, **characterised in that** the guide bead (3, 3') comprises stratified bodies (43a; 43b) of hard metal and stratified bodies (44) of diamond or of cubical boron nitride.

5. Reamer according to any of claims 1 to 4, **characterised in that** the guide bead (3, 3') comprises stratified bodies (43a, 43b) of hard metal having a thickness of 1000 µm to 1500 µm.

6. Reamer according to any of claims 1 to 5, **characterised in that** the guide bead (3, 3') comprises stratified bodies (43a; 43b) of diamond or cubical boron nitride having a thickness of 2 µm to 500 µm, particularly of 10 µm to 50 µm.

7. Reamer according to any of claims 1 to 6, **characterised in that** at least one stratified body (43a, 43b) consists of hard metal and is connected to a stratified body (44) of diamond.

8. Reamer according to claim 7, **characterised in that** the stratified body (44) of diamond is produced by precipitation of diamond onto the stratified body (43a, 43b) of hard metal.

9. Reamer according to claim 7 or 8, **characterised in that** the guide bead (3, 3') comprises stratified bodies (44) of diamond which are connected to a first brazing mass (45).

10. Reamer according to claim 9, **characterised in that** said first brazing mass (45) comprises copper and silver as its main constituents, and titanium and/or yttrium as further elements.

11. Reamer according to claim 9 or 10, **characterised in that that** stratified body/bodies which are formed by said first brazing mass (45) has/have a thickness of 10 µm to 25 µm.

12. Reamer according to any of claims 9 to 11, **characterised in that** the guide bead is connected to said basic body (1) by a second brazing mass which has a lower melting point than a first brazing mass.

13. Reamer according to any of claims 1 to 11, **characterised in that** the guide bead (3, 3') is connected to the basic body (1) by an adhesive mass.

## Revendications

1. Alésoir comprenant un corps de base (1) avec un élément de coupe (2) et au moins une barre conductrice (3, 3') sensiblement axialement orientée, qui comprend une surface d'appui (31) et une surface de guidage (32), ladite barre conductrice (3, 3') étant raccordée au corps de base (1) à la région de la surface d'appui (31), **caractérisé en ce, que** la barre conductrice (3, 3'), à partir de la surface de guidage (32) vers la surface d'appui (31), est formée par des stratifiés (41 à 45) en matériaux différents.

2. Alésoir selon la revendication 1, **caractérisé en ce, que** les stratifiés (41 à 45) s'étendent sensiblement parallèlement à l'axe de rotation (A) du corps de base (1).

3. Alésoir selon la revendication 1 ou 2, **caractérisé en ce, que** les stratifiés (41 à 45) s'étendent sensiblement normalement à la direction de rotation (A) du corps de base (1).

4. Alésoir selon une quelconque des revendications 1 à 3, **caractérisé en ce, que** la barre conductrice (3, 3') comprend des stratifiés (43a; 43b) en métal dur et des stratifiés (44) en diamant ou en nitrure de bore cubique.

5. Alésoir selon une quelconque des revendications 1 à 4, **caractérisé en ce, que** la barre conductrice (3, 3') comprend des stratifiés (43a; 43b) en métal dur d'une épaisseur de 1000 µm à 1500 µm.

6. Alésoir selon une quelconque des revendications 1 à 5, **caractérisé en ce, que** la barre conductrice (3, 3') comprend des stratifiés (43a; 43b) en diamant ou en nitrure de bore cubique d'une épaisseur de 2 µm à 500 µm, particulièrement de 10 µm à 50 µm.

7. Alésoir selon une quelconque des revendications 1 à 6, **caractérisé en ce, qu'**au moins un stratifié (43a, 43b) consiste de métal dur et est relié à un stratifié (44) en diamant.

8. Alésoir selon la revendication 7, **caractérisé en ce, que** le stratifié (44) en diamant est produit par précipitation de diamant sur le stratifié (43a, 43b) en métal dur.

9. Alésoir selon la revendication 7 ou 8, **caractérisé en ce, que** la barre conductrice (3, 3') comprend des stratifiés (44) en diamant, qui sont reliés avec une première masse à braser (45).

10. Alésoir selon la revendication 9, **caractérisé en ce, que** la première masse à braser (45) comprend de cuivre et d'argent comme des constituants principaux, et de titane et/ou d'yttrium comme des autres éléments.

11. Alésoir selon la revendication 9 ou 10, **caractérisé en ce, que** le/les stratifié(s) formé(s) par ladite première masse à braser (45) a (ont) une épaisseur de 10 µm à 25 µm.

12. Alésoir selon une quelconque des revendications 9 à 11, **caractérisé en ce, que** la barre conductrice est raccordé au corps de base (1) par une seconde masse à braser, qui présente un point de fusion plus bas qu'une première masse à braser.

13. Alésoir selon une quelconque des revendications 1 à 11, **caractérisé en ce, que** la barre conductrice (3, 3') est raccordé au corps de base (1) par une masse adhésive.
